# EUROPEAN PATENT SPECIFICATION

(11) **EP 3 226 204 B1**
(45) Date of publication and mention of the grant of the patent: **09.12.2020**
(21) Application number: 17157468.4
(22) Date of filing: 22.02.2017
(51) Int. Cl.: G06T 5/00

(54) **METHOD AND APPARATUS FOR INTELLIGENTLY CAPTURING IMAGE**
INTELLIGENTES BILDAUFNAHMEVERFAHREN UND VORRICHTUNG
PROCÉDÉ ET APPAREIL DE CAPTURE D'IMAGE INTELLIGENTE

(30) Priority: 31.03.2016 CN 201610201760
(43) Date of publication of application: 04.10.2017
(73) Proprietor: Beijing Xiaomi Mobile Software Co., Ltd., Beijing 100085 (CN)
(72) Inventor: LIU, Huayijun, Beijing, Beijing 100085 (CN); CHEN, Tao, Beijing, Beijing 100085 (CN); WU, Ke, Beijing, Beijing 100085 (CN)
(74) Representative: dompatent von Kreisler Selting Werner - Partnerschaft von Patent- und Rechtsanwälten mbB

(56) References cited:
- GB-A- 2 408 887
- US-A1- 2009 324 103
- ARTURO FLORES ET AL: "Removing pedestrians from Google street view images", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 13 June 2010 (2010-06-13), pages 53-58, XP031728442, ISBN: 978-1-4244-7029-7
- GUILLEMOT CHRISTINE ET AL: "Image Inpainting : Overview and Recent Advances", IEEE SIGNAL PROCESSING MAGAZINE, IEEE SERVICE CENTER, PISCATAWAY, NJ, US, vol. 31, no. 1, 1 January 2014 (2014-01-01), pages 127-144, XP011533102, ISSN: 1053-5888, DOI: 10.1109/MSP.2013.2273004 [retrieved on 2013-12-03]
- BASTIAN LEIBE ET AL: "Robust Object Detection with Interleaved Categorization and Segmentation", INTERNATIONAL JOURNAL OF COMPUTER VISION, vol. 77, no. 1-3, 17 November 2007 (2007-11-17), pages 259-289, XP055148607, ISSN: 0920-5691, DOI: 10.1007/s11263-007-0095-3
- ANGELO NODARI ET AL: "Digital privacy: Replacing pedestrians from Google Street View images", PATTERN RECOGNITION (ICPR), 2012 21ST INTERNATIONAL CONFERENCE ON, IEEE, 11 November 2012 (2012-11-11), pages 2889-2893, XP032329954, ISBN: 978-1-4673-2216-4
- DALAL N ET AL: "Histograms of oriented gradients for human detection", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, 25 June 2005 (2005-06-25), pages 886-893vol.1, XP031330347, ISBN: 978-0-7695-2372-9

## Description

### TECHNICAL FIELD

The present disclosure generally relates to the field of image processing technology, and more particularly, to a method and an apparatus for intelligently capturing an image.

### BACKGROUND

Nowadays, with the rapid development of functions of electronic devices, users often capture images with electronic devices.

When a user captures an image, an obstacle often appears in the image. For example, the user wants to capture a clear blue sky, a flying bird appears in the field of the camera. If the user wants an image of a blue sky without a flying bird, in this case the flying bird becomes an obstacle in the image, which bothers the user. In the related art, the user can process the image with drawing software in post-processing to remove the obstacle. However, it is burdensome and inefficient to remove the obstacle through the post-processing.

Arturo Flores et al: "Removing pedestrians form Google Street view images", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 13 June 2010, pages 53 - 58 describes an algorithm to remove pedestrians from captured images.

GB 2 408 887 describes a system for removing objects of an image, wherein the object is removed from the image and the region of the removed object is replaced by an image region of another captured image.

US 2009/0324103 describes a method for removing unwanted objects from an image, while similar images are determined and unobstructed areas of these similar images are used to overlay the unwanted object.

Angelo Nodari et al: "Digital privacy: Replacing pedestrians from Google Street View images", PATTERN RECOGNITION (ICPR), 2012 21ST INTERNATIONAL CONFERENCE ON, IEEE, 11 November 2012 (2012-11-11), pages 2889-2893, describes a method for replacing obstacles, corresponding to pedestrians, in Google Street View images.

### SUMMARY

The present disclosure provides a computer implemented method and an apparatus for capturing an image. The technical solutions are as follows.

According to a first aspect of embodiments of the present disclosure, there is provided a computer-implemented method for capturing an image, including: acquiring an image captured by a camera; acquiring an obstacle in the image; erasing information within an obstacle region which corresponds to the obstacle; and repairing the obstacle region in which information has been erased. Since the electronic device can automatically detect and erase the obstacle in the image, and can automatically repair the erased region in the image, the obstacle in the image can be automatically removed when the image is captured. It can solve the problem in the related art that the obstacle has to be removed in the post-processing of the image, and it can simplify the operation of the user and improve the user experience.

Further, acquiring an obstacle in the image includes: acquiring an object having a shape similar to a preset obstacle shape in the image, or acquiring an object if a difference in color between pixels of the object and pixels of background of the image is larger than a preset threshold; and displaying the acquired object with a mark, and if the object displayed with a mark is selected, taking the object as the obstacle in the image.

Optionally, displaying the acquired object with a mark, and if the object displayed with a mark is selected, taking the object as the obstacle in the image, includes: displaying a delete control at the acquired object in the image, and if the delete control is triggered, taking the object corresponding to the deleted control as the obstacle in the image; or displaying the acquired object with a mark in the image, and taking the object as the obstacle in the image if the object is triggered by an extended press. Since the electronic device can automatically highlight a recognized obstacle for the user, the user can select a region to be erased by triggering the region correspondingly. It can simplify the operation of determining an obstacle.

Further, erasing information within an obstacle region which corresponds to the obstacle includes: recognizing an outline of the obstacle in a region of the image which contains the obstacle, a difference in gray-scale between a pixel constituting the outline of the obstacle and a pixel adjacent to the pixel being larger than a preset threshold; and determining a region surrounding the outline of the obstacle as an obstacle region, and erasing information within the obstacle region, wherein, the obstacle region has a size that is slightly larger than the size of the shape of the obstacle. It enables extracting an outline of an obstacle, determining a region to be erased according to the outline of the obstacle, i.e. an obstacle region, and erasing information within the region.

Optionally, repairing the obstacle region in which information has been erased includes: acquiring a geographical location for capturing the image, and retrieving images of the same type, each of the retrieved images having a capturing location the same as the geographical location; selecting a reference image for repairing from the retrieved images of the same type, a similarity between the image and the reference image for repairing being larger than a similarity threshold; and repairing the obstacle region in the image according to the reference image for repairing. Since a reference image for repairing can be retrieved from images of the same type, and the obstacle region in the image can be repaired according to the reference image for repairing, it can enable intelligent erasing the obstacle in the image to acquire a complete image containing no obstacle. Moreover, it can resume the repaired region to a more realistic appearance, presenting a realistic presentation of the image.

Optionally, repairing the obstacle region in the image according to the reference image for repairing includes: acquiring information for repairing from a region in the reference image for repairing which corresponds to the obstacle, and repairing the obstacle region in the image with the information for repairing.

Optionally, repairing the obstacle region in which information has been erased includes: stretching and deforming a background around the obstacle region to fill the obstacle region. In case where images of the same type cannot be acquired to repair the obstacle region in the image, the obstacle region can be repaired by stretching the background of the image since the background of the image has similar contents. In this way, it can reduce the difference between the repaired obstacle region and the background.

According to a second aspect of embodiments of the present disclosure, there is provided an apparatus for capturing an image, according to claims 6-10.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for intelligently capturing an image according to an exemplary embodiment;
Fig. 2A is a flow chart illustrating a method for intelligently capturing an image according to another exemplary embodiment;
Fig. 2B is a flow chart illustrating a process for acquiring an obstacle in an image according to an exemplary embodiment;
Fig. 2C is a schematic diagram illustrating a region in which an obstacle is present according to an exemplary embodiment;
Fig. 2D is a schematic diagram illustrating a process of erasing information within an obstacle region according to an exemplary embodiment;
Fig. 2E is a flow chart illustrating a process for repairing an obstacle region in which information has been erased according to an exemplary embodiment;
Fig. 2F is a reference image for repairing according to an exemplary embodiment;
Fig. 2G is an image resulted from repairing an image with a reference image for repairing according to an exemplary embodiment;
Fig. 2H is an image captured by a camera according to an exemplary embodiment;
Fig. 2I is a schematic diagram in which a delete control is displayed at a recognized object in an image according to an exemplary embodiment;
Fig. 2J is a schematic diagram in which a recognized object is displayed with a mark in an image according to an exemplary embodiment;
Fig. 3 is a block diagram illustrating an apparatus for intelligently capturing an image according to an exemplary embodiment;
Fig. 4 is a block diagram illustrating an apparatus for intelligently capturing an image according to another exemplary embodiment; and
Fig. 5 is a block diagram illustrating an apparatus for intelligently capturing an image according to an example.

### DETAILED DESCRIPTION

Reference will now be made in detail to exemplary embodiments, examples of which are illustrated in the accompanying drawings. The following description refers to the ac companying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

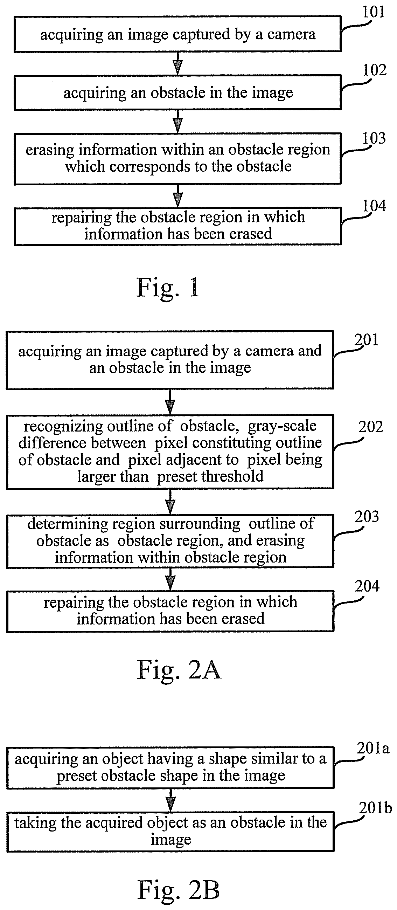

Fig. 1 is a flow chart illustrating a method for intelligently capturing an image according to an exemplary embodiment. The method for intelligently capturing an image is applied in an electronic device containing a camera. Here, the electronic device can be a smart mobile phone, a tablet computer, a video camera, a photographic camera or other devices with a capability of capturing an image. The method for intelligently capturing an image can include the following steps.

At step 101, an image captured by a camera is acquired.

At step 102, an obstacle in the image is acquired.

At step 103, information within an obstacle region which corresponds to the obstacle is erased.

At step 104, the obstacle region in which information has been erased is repaired.

Accordingly, in the method for intelligently capturing an image provided by the embodiments of the present disclosure, an image captured by a camera and an obstacle in the image are acquired, information within an obstacle region corresponding to the obstacle is erased, and the obstacle region is repaired after the information is erased. Since the obstacle in the image is automatically detected and erased by the electronic device, and the erased region in the image is automatically repaired by the electronic device, it can automatically remove the obstacle in the image when capturing an image. It can solve the problem in the related art that the obstacle has to be removed in the post-processing of the image, and it can simplify the operation of the user and improve the user experience.

An electronic device generally provides a control for intelligently capturing an image for the user. The control for intelligently capturing an image is configured to trigger the electronic device to enter a mode for intelligently erasing an obstacle. When the electronic device enters the mode for intelligently erasing an obstacle, the electronic device can erase an obstacle in an image being captured by the user with a camera, and can also erase an obstacle in an image already captured by the user.

Fig. 2A is a flow chart illustrating a method for intelligently capturing an image according to another exemplary embodiment. The method for intelligently capturing an image can be applied in an electronic device containing a camera. Here, the electronic device can be a smart mobile phone, a tablet computer, a video camera, a photographic camera or other devices with a capability of capturing an image. The method for intelligently capturing an image can include the following steps.

At step 201, an image captured by a camera and an obstacle in the image are acquired.

Optionally, the obstacle in the image can be acquired through the sub-steps shown in Fig. 2B.

At sub-step 201a, an object having a shape similar to a preset obstacle shape in the image is acquired.

The preset obstacle shape can be set by a system developer, or by the user. For example, the user can previously set a wire mesh as an obstacle. In this case, the electronic device will acquire an object having a shape similar to the shape of the wire mesh. For example, the user can previously set a bird as an obstacle. In this case, the electronic device will acquire an object having a shape similar to the shape of a bird. Optionally, when the obstacle is set by the user, the user can set the shape of an obstacle in a handwriting form, or an object can be set as an obstacle according to the user history.

Optionally, it is acquired an object in the image which has a similarity to the preset obstacle shape larger than a preset threshold, such that as for a type of obstacles, the number of locally stored preset obstacle shapes corresponding to the same type of obstacles can be reduced. For example, the system developer sets a bird as an obstacle, the electronic device can store several shapes of a bird in several postures as corresponding obstacle shapes, such as a shape of a bird when the bird is flying, a shape of a bird when the bird is resting, and so on.

At sub-step 201b, the acquired object is taken as an obstacle in the image.

At step 202, an outline of the obstacle is recognized, in which a difference in gray-scale between a pixel constituting the outline of the obstacle and a pixel adjacent to the pixel being larger than a preset threshold.

In a region of the image where the obstacle is present, the outline of the obstacle is recognized. Specifically, in the region, a difference in gray-scale between each pixel and a pixel adjacent to the pixel is calculated. A pixel which has a difference in gray-scale larger than a preset threshold is determined as a peripheral pixel. A line constituted by such peripheral pixels is the outline of the obstacle.

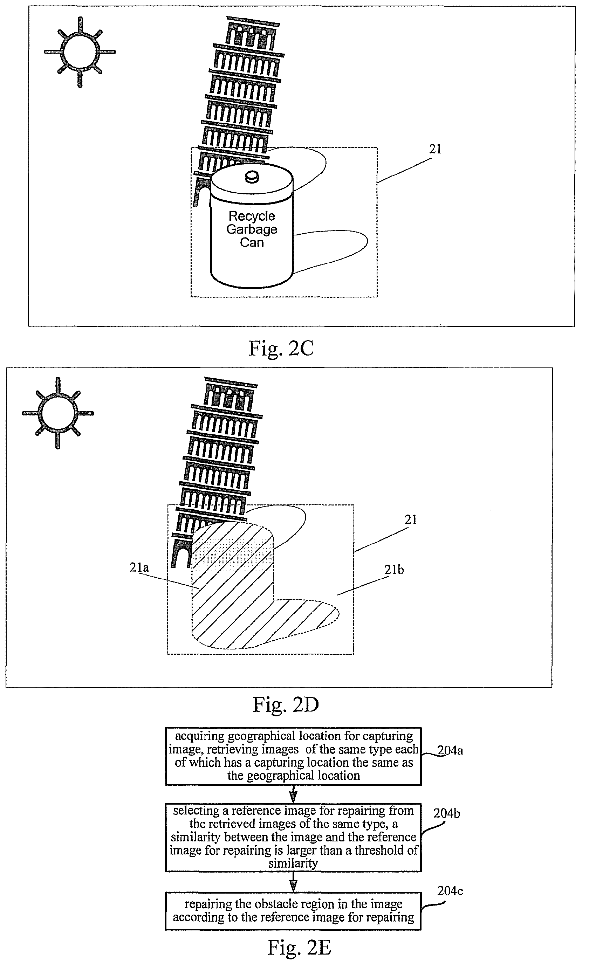

Here, the region where the obstacle is present refers to a region in the image which contains the obstacle. Generally, the region has a size the same as or slightly larger than the size of the shape of the obstacle, for example, as shown in Fig. 2C, which is a schematic diagram illustrating a region in which an obstacle is present according to an exemplary embodiment. If the system developer sets a garbage can as an obstacle, the region where the garbage can is present can be a region 21 in the image. Then, in subsequent process, both of the garbage and the shadow of the garbage can be erased as an obstacle region.

It should be noted that, the preset threshold of difference can be set by the system developer. The value of the preset threshold of difference is not specifically limited in the embodiment, and can be determined according to practical application.

At step 203, a region surrounding the outline of the obstacle is determined as an obstacle region, and information within the obstacle region is erased.

By determining the region surrounding the outline of the obstacle as an obstacle region, it can avoid deleting region beyond the obstacle together with the obstacle. For example, still referring to Fig. 2C, which shows an original image captured by the camera, after the outline is recognized in the region 21 of the image, a region surrounding the outline of the obstacle is determined as the obstacle region, that is, a hatched region 21a as shown in Fig. 2D. Fig. 2D is a schematic diagram illustrating a process of erasing information within an obstacle region according to an exemplary embodiment. To erase information within the obstacle region, only the hatched region 21a in the Fig. 2D is to be erased, and a remaining region 21b of the region 21a in the region 21 will not be erased.

At step 204, the obstacle region in which information has been erased is repaired.

This step can be performed through the following sub-steps as shown in Fig. 2E.

At sub-step 204a, a geographical location for capturing the image is acquired, and images of the same type each of which has a capturing location the same as the geographical location are retrieved.

The geographical location can be acquired through various manners, such as Global Positioning System (GPS), Beidou Navigation System or the like. The manner for acquiring the geographical location when capturing the image is not specifically limited in the present embodiment, and can be determined according to practical application.

Here, the images having the same geographical location refers to images captured at the same geographical location and stored in the server. For example, if the geographical location when the user captures an image is at Tiananmen square in Beijing, images captured at the same location Tiananmen square in Beijing and stored in the server are retrieved from the server. The images of the same type refer to images containing objects similar to the objects in the captured image.

For example, Fig. 2C is an image captured by the user, and Fig. 2D is an image after the information of the obstacle region is erased. If the geographical location when the user captures the image is around the Leaning Tower of Pisa, images stored in the server which have capturing locations around the Leaning Tower of Pisa are retrieved. Since the original image captured by the user contains the Leaning Tower of Pisa, as shown in Fig. 2C, images containing the Leaning Tower of Pisa are retrieved from the images which have capturing locations around the Leaning Tower of Pisa in the server, as the images of the same type.

At sub-step 204b, a reference image for repairing is selected from the retrieved images of the same type, a similarity between the image and the reference image for repairing is larger than a similarity threshold.

For each of the retrieved images of the same type, a similarity between the image and the original image captured by the camera is calculated. An image with a similarity larger than the similarity threshold is determined as a candidate reference image for repairing. A candidate reference image for repairing with a maximum similarity to the original image is determined as the reference image for repairing.

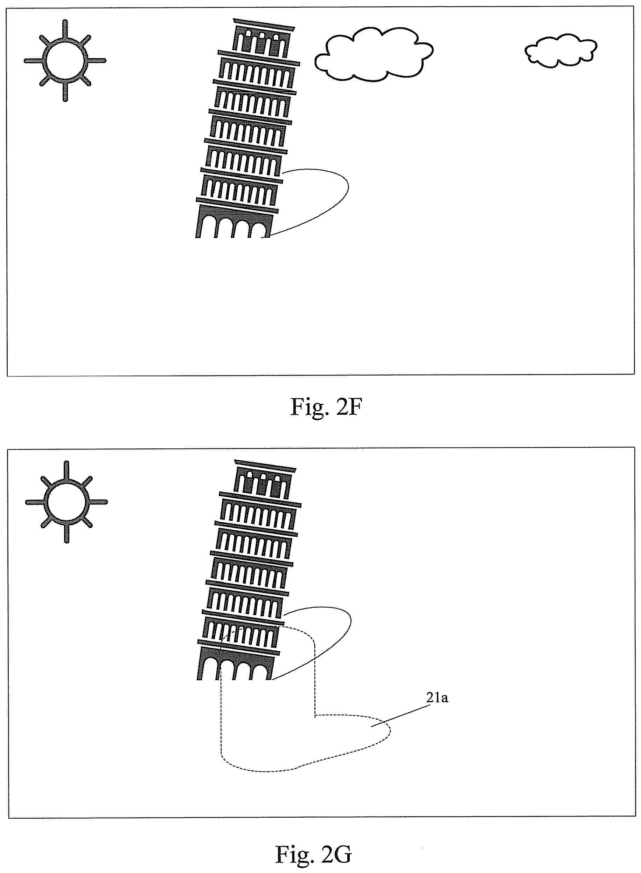

For example, if the geographical location when the user captures the image as shown in Fig. 2C is around the Leaning Tower of Pisa, from the retrieved images of the same type which have capturing locations around the Leaning Tower of Pisa in the server, a reference image for repairing is selected as shown in Fig. 2F.

Generally, the similarity threshold is set by the system developer. The value of the similarity threshold is not specifically limited in the embodiment, and can be determined according to practical application.

At sub-step 204c, the obstacle region in the image is repaired according to the reference image for repairing.

Specifically, information for repairing is acquired from a region in the reference image for repairing which corresponds to the obstacle, and the obstacle region in the image is repaired with the information for repairing.

The region in the reference image for repairing which corresponds to the obstacle can be recognized with image recognition technology. Pixels around the recognized region are the same as the pixels around the obstacle region. The image information of the region is acquired as information for repairing, and the obstacle region in the image is repaired with the information for repairing.

For example, the image after the image information in the obstacle region is erased as shown in Fig. 2D can be repaired with the reference image as shown in Fig. 2F, to obtain a repaired image as shown in Fig. 2G. In the image, the region with image information of the obstacle region repaired according to the reference image as shown in Fig. 2F is the region 21a.

Accordingly, in the method for intelligently capturing an image provided by the embodiments of the present disclosure, an image captured by a camera and an obstacle in the image are acquired, information within an obstacle region corresponding to the obstacle is erased, and the obstacle region is repaired after the information is erased. Since the obstacle in the image is automatically detected and erased by the electronic device, and the erased region in the image is automatically repaired by the electronic device, it can automatically remove the obstacle in the image when capturing an image. It can solve the problem in the related art that the obstacle has to be removed in the post-processing of the image, and it can simplify the operation of the user and improve the user experience.

Optionally, the obstacle region in which information has been erased can be repaired by stretching and deforming a background around the obstacle region to fill the obstacle region.

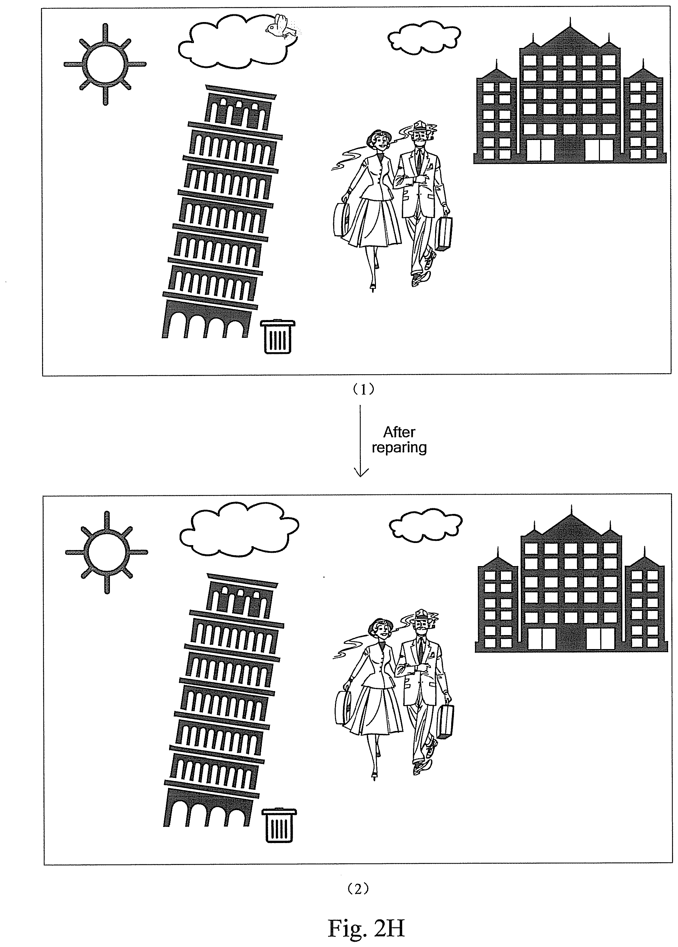

For example, an image captured by the camera is as shown in Fig. 2H(1), and the user has set a bird as an obstacle. In this case, the obstacle region in the image is acquired and erased. Then, in order to repair the obstacle region with the information erased, a background image around the obstacle region is acquired, for example, a white cloud around the obstacle bird is acquired from the image, the image of the white cloud is stretched and deformed to a shape the same as the shape of the obstacle region, to fill the obstacle region. The repaired image is as shown in Fig. 2H(2).

The obstacle in the image can be acquired through the following manners.

In one possible implementation, if a difference in color between pixels of an object and pixels of background of the image is larger than a preset threshold, the object is acquired as an obstacle of the image.

That is to say, for each object in the image, a difference between pixels of the object and the pixels of the background is detected, and if the difference in pixels is larger than a preset threshold, the object is taken as an obstacle. For example, if the user wants an image of a piece of white paper, and a captured image of the white paper has a black dot. In this case, the electronic device can detect that the difference in pixels between the black dot and the white background is larger than the preset threshold, and then determine the black dot as the obstacle of the image.

An object in an image can be determined through various manners, for example, by detecting an edge of the image, to recognize an outline of the object constituted by edge lines. Recognizing an object in an image is practicable to those skilled in the art, which will not be elaborated in the embodiment.

In one possible implementation, an object with a shape similar to a preset obstacle shape is acquired in the image, the acquired object is displayed with a mark, and if the object displayed with a mark is selected the object is taken as the obstacle in the image.

That is to say, a detected object with a shape similar to a preset obstacle shape in the image is highlighted for the user to select, and if the object selected by the user the object is taken as an obstacle.

In one possible implementation, if a difference in color between pixels of an object and pixels of background of the image is larger than a preset threshold, the object is acquired and displayed with a mark, and an object selected from an object displayed with a mark is taken as an obstacle.

That is to say, if a difference in color between pixels of an object and pixels of background of the image is larger than a preset threshold, the object is highlighted for the user to select, and the object selected by the user is taken as an obstacle.

Optionally, the acquired object can be displayed with a mark, and an object selected from the objects displayed with a mark is taken as an obstacle. It can be implemented through the following manners.

In one possible implementation, a delete control is displayed at a recognized object in the image, and the object corresponding to a triggered delete control is determined as an obstacle in the image.

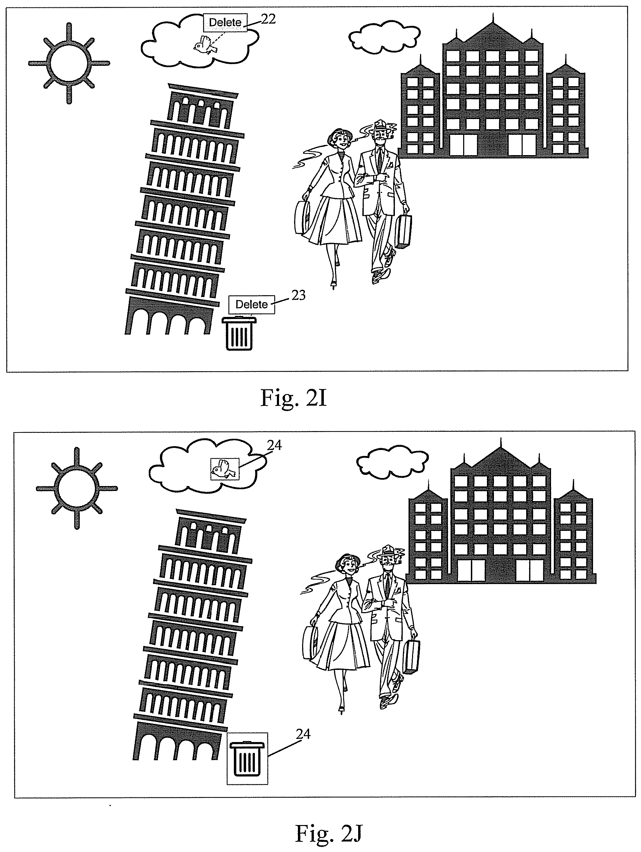

For example, if the system developer sets the bird and the garbage can as obstacles, the electronic device can recognize an object with a shape corresponding to the preset shape of a bird or the preset shape of a garbage can in the image. Fig. 2I is a schematic diagram in which a delete control is displayed at a recognized object in an image according to an exemplary embodiment. A delete control 22 is displayed at an object recognized according to a preset obstacle shape of a bird, and a delete control 23 is displayed at an object recognized according to a preset obstacle shape of a garbage can. When it is detected that a delete control is triggered, the object corresponding to the delete control is determined as an obstacle.

In another possible implementation, the recognized object can be displayed with a mark in the image, and determining the object as the obstacle in the image can be triggered by an extended press.

For example, if the system developer sets the bird and the garbage can as obstacles, the electronic device can recognize an object with a shape corresponding to the preset shape of a bird or the preset shape of a garbage can in the image. Fig. 2J is a schematic diagram in which a recognized object is displayed with a mark in an image according to an exemplary embodiment. As shown in Fig. 2J, the recognized object is displayed with a mark with a dash-line box 24. The user can determine whether the object recognized by the electronic device is an obstacle according to the dash-line box 24. The user can select an object to be erased and perform an extended press on it. Then, the electronic device can determine the obstacle triggered by the extended press action as the obstacle in the image.

Optionally, the obstacle in the image can be acquired through the following manners: acquiring a selected region, extracting an outline of the obstacle in the selected region and taking a region surrounding the outline of the obstacle as an obstacle region.

That is to say, the user can provide an obstacle region of the image manually. Specifically, the user can select a region in the image, the electronic device can extract an outline of the obstacle within the selected region, and determine the region surrounding the outline of the obstacle as an obstacle region.

Optionally, the outline of the obstacle which is extracted from the selected region can be added as a preset obstacle shape to a local library of preset shapes of obstacles, for the electronic device to subsequently detect the obstacle designated by the user to be erased in the image and acquire the obstacle region.

The following are apparatus embodiments of the present disclosure, which can be configured to perform the method embodiments of the present disclosure. For details that are not disclosed in the apparatus embodiments of the present disclosure, reference can be made to the method embodiments of the present disclosure.

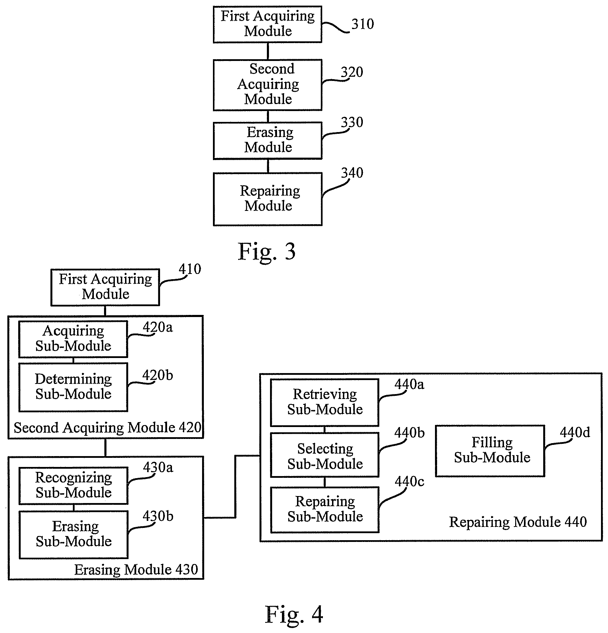

Fig. 3 is a block diagram illustrating an apparatus for intelligently capturing an image according to an exemplary embodiment. The apparatus for intelligently capturing an image is applied in an electronic device containing a camera. Here, the electronic device can be a smart mobile phone, a tablet computer, a video camera, a photographic camera or other devices with a capability of capturing an image. The apparatus for intelligently capturing an image can include a first acquiring module 310, a second acquiring module 320, an erasing module 330 and a repairing module 340.

The first acquiring module 310 is configured to acquire an image captured by a camera.

The second acquiring module 320 is configured to acquire an obstacle in the image which is acquired by the first acquiring module 310.

The erasing module 330 is configured to erase information within an obstacle region which corresponds to the obstacle acquired by the second acquiring module 320.

The repairing module 340 is configured to repair the obstacle region in which information has been erased.

Accordingly, in the apparatus for intelligently capturing an image provided by the embodiments of the present disclosure, an image captured by a camera and an obstacle in the image are acquired, information within an obstacle region corresponding to the obstacle is erased, and the obstacle region is repaired after the information is erased. Since the obstacle in the image is automatically detected and erased by the electronic device, and the erased region in the image is automatically repaired by the electronic device, it can automatically remove the obstacle in the image when capturing an image. It can solve the problem in the related art that the obstacle has to be removed in the post-processing of the image, and it can simplify the operation of the user and improve the user experience.

Fig. 4 is a block diagram illustrating an apparatus for intelligently capturing an image according to another exemplary embodiment. The apparatus for intelligently capturing an image is applied in an electronic device containing a camera. Here, the electronic device can be a smart mobile phone, a tablet computer, a video camera, a photographic camera or other devices with a capability of capturing an image. The apparatus for intelligently capturing an image can include a first acquiring module 410, a second acquiring module 420, an erasing module 430 and a repairing module 440.

The first acquiring module 410 is configured to acquire an image captured by a camera.

The second acquiring module 420 is configured to acquire an obstacle in the image which is acquired by the first acquiring module 410.

The erasing module 430 is configured to erase information within an obstacle region which corresponds to the obstacle acquired by the second acquiring module 420.

The repairing module 440 is configured to repair the obstacle region in which information has been erased.

Optionally, the second acquiring module 420 includes: an acquiring sub-module 420a and a determining sub-module 420b.

The acquiring sub-module 420a is configured to acquire an object having a shape similar to a preset obstacle shape in the image which is acquired by the first acquiring module 410, or acquire an object if a difference in color between pixels of the object and pixels of background of the image acquired by the first acquiring module 410 is larger than a preset threshold.

The preset obstacle shape can be set by a system developer, or by the user. Optionally, it is acquired an object in the image which has a similarity to the preset obstacle shape larger than a preset threshold, such that as for a type of obstacles, the number of locally stored preset obstacle shapes corresponding to the same type of obstacles can be reduced.

The determining sub-module 420b is configured to determine the object acquired by the acquiring sub-module 420a as the obstacle in the image; or display the object acquired by the acquiring sub-module 420a with a mark, and if the object displayed with a mark is selected, determine the object as the obstacle in the image.

Optionally, the determining sub-module 420b is further configured to: display a delete control at the acquired object in the image, and if the delete control is triggered, determine the object corresponding to the deleted control as the obstacle in the image; or
display the acquired object with a mark in the image, and determine the object as the obstacle in the image if the object is triggered by an extended press.

The erasing module 430 includes: a recognizing sub-module 430a and an erasing sub-module 430b.

The recognizing sub-module 430a is configured to recognize an outline of the obstacle, a difference in gray-scale between a pixel constituting the outline of the obstacle and a pixel adjacent to the pixel being larger than a preset threshold.

In a region of the image where the obstacle is present, the outline of the obstacle is recognized. Specifically, in the region, a difference in gray-scale between each pixel and a pixel adjacent to the pixel is calculated. A pixel which has a difference in gray-scale larger than a preset threshold is determined as a peripheral pixel. A line constituted by such peripheral pixels is the outline of the obstacle.

Here, the region where the obstacle is present refers to a region in the image which contains the obstacle. Generally, the region has a size the same as or slightly larger than the size of the shape of the obstacle.

It should be noted that, the preset threshold of difference can be set by the system developer. The value of the preset threshold of difference is not specifically limited in the embodiment, and can be determined according to practical application.

The erasing sub-module 430b is configured to determine a region surrounding the outline of the obstacle as an obstacle region, and erase information within the obstacle region.

By determining the region surrounding the outline of the obstacle as an obstacle region, it can avoid deleting region beyond the obstacle together with the obstacle.

Optionally, the repairing module 440 includes: a retrieving sub-module 440a, a selecting sub-module 440b and a repairing sub-module 440c.

The retrieving sub-module 440a is configured to acquire a geographical location for capturing the image, and retrieve images of the same type, each of the retrieved images having a capturing location the same as the geographical location.

The geographical location can be acquired through various manners, such as Global Positioning System (GPS), Beidou Navigation System or the like. The manner for acquiring the geographical location when capturing the image is not specifically limited in the present embodiment, and can be determined according to practical application.

Here, the images having the same geographical location refers to images captured at the same geographical location and stored in the server. For example, if the geographical location when the user captures an image is at Tiananmen square in Beijing, images captured at the same location Tiananmen square in Beijing and stored in the server are retrieved from the server. The images of the same type refer to images containing objects similar to the objects in the captured image.

The selecting sub-module 440b is configured to select a reference image for repairing from the images of the same type retrieved by the retrieving sub-module 440a, a similarity between the image and the reference image for repairing being larger than a similarity threshold.

For each of the retrieved images of the same type, a similarity between the image and the original image captured by the camera is calculated. An image with a similarity larger than the similarity threshold is determined as a candidate reference image for repairing. A candidate reference image for repairing with a maximum similarity to the original image is determined as the reference image for repairing.

Generally, the similarity threshold is set by the system developer. The value of the similarity threshold is not specifically limited in the embodiment, and can be determined according to practical application.

The repairing sub-module 440c is configured to repair the obstacle region in the image according to the reference image for repairing selected by the selecting sub-module 440b.

Specifically, information for repairing is acquired from a region in the reference image for repairing which corresponds to the obstacle, and the obstacle region in the image is repaired with the information for repairing.

The region in the reference image for repairing which corresponds to the obstacle can be recognized with image recognition technology. Pixels around the recognized region are the same as the pixels around the obstacle region. The image information of the region is acquired as information for repairing, and the obstacle region in the image is repaired with the information for repairing the image.

Optionally, the repairing sub-module 440c is further configured to: acquire information for repairing from a region corresponding to the obstacle in the reference image for repairing selected by the selecting sub-module 440b, and repair the obstacle region in the image with the information for repairing.

Optionally, the repairing module 440 further includes: a filling sub-module 440d.

The filling sub-module 440d is configured to stretch and deform a background around the obstacle region to fill the obstacle region.

Accordingly, in the apparatus for intelligently capturing an image provided by the embodiments of the present disclosure, an image captured by a camera and an obstacle in the image are acquired, information within an obstacle region corresponding to the obstacle is erased, and the obstacle region is repaired after the information is erased. Since the obstacle in the image is automatically detected and erased by the electronic device, and the erased region in the image is automatically repaired by the electronic device, it can automatically remove the obstacle in the image when capturing an image. It can solve the problem in the related art that the obstacle has to be removed in the post-processing of the image, and it can simplify the operation of the user and improve the user experience.

Optionally, by displaying a delete control at the acquired object in the image, and if the delete control is triggered, determining the object corresponding to the deleted control as the obstacle in the image; or displaying the acquired object with a mark in the image, and determining the object as the obstacle in the image if the object is triggered by an extended press. Since the electronic device can automatically highlight a recognized obstacle for the user, the user can select a region to be erased by triggering the region correspondingly. It can simplify the operation of determining an obstacle.

By recognizing an outline of the obstacle, a difference in gray-scale between a pixel constituting the outline of the obstacle and a pixel adjacent to the pixel being larger than a preset threshold; and determining a region surrounding the outline of the obstacle as an obstacle region, and erasing information within the obstacle region. It enables extracting an outline of an obstacle, determining a region to be erased according to the outline of the obstacle, i.e. an obstacle region, and erasing information within the region.

Optionally, by acquiring a geographical location for capturing the image, and retrieving images of the same type, each of the retrieved images having a capturing location the same as the geographical location; selecting a reference image for repairing from the retrieved images of the same type, a similarity between the image and the reference image for repairing being larger than a similarity threshold; and repairing the obstacle region in the image according to the reference image for repairing. Since a reference image for repairing can be retrieved from images of the same type, and the obstacle region in the image can be repaired according to the reference image for repairing, it can enable intelligent erasing the obstacle in the image to acquire a complete image containing no obstacle. Moreover, it can resume the repaired region to a more realistic appearance, presenting a realistic presentation of the image.

Optionally, by acquiring information for repairing from a region in the reference image for repairing which corresponds to the obstacle, and repairing the obstacle region in the image with the information for repairing.

Optionally, by stretching and deforming a background around the obstacle region to fill the obstacle region. In case where images of the same type cannot be acquired to repair the obstacle region in the image, the obstacle region can be repaired by stretching the background of the image since the background of the image has similar contents. In this way, it can reduce the difference between the repaired obstacle region and the background.

In an exemplary embodiment of the present disclosure, there is provided an apparatus for intelligently capturing an image, including: a processor; and a memory for storing instructions executable by the processor;
wherein the processor is configured to perform:
acquiring an image captured by a camera;
acquiring an obstacle in the image;
erasing information within an obstacle region which corresponds to the obstacle; and
repairing the obstacle region in which information has been erased.

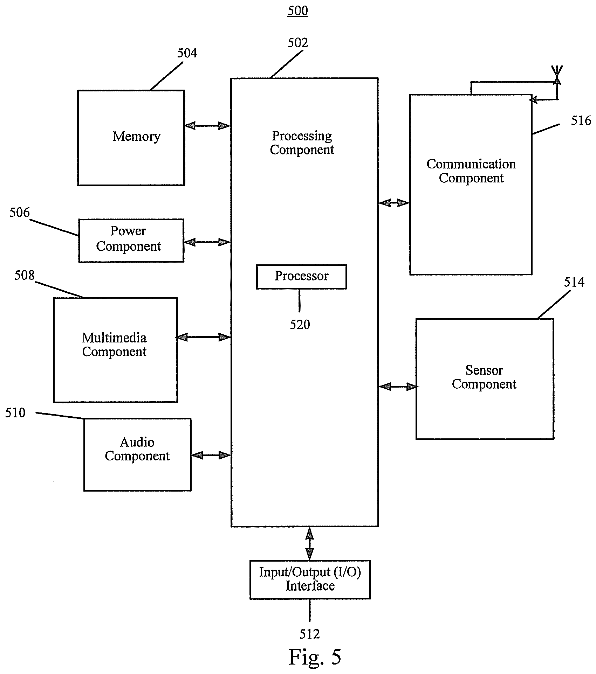

Fig. 5 is a block diagram illustrating another apparatus for intelligently capturing an image according to an example. For example, the apparatus 500 can be a smart mobile phone, a tablet computer, a video camera, a photographic camera or other devices with a capability of capturing an image, and can also be a computer, a digital broadcast terminal, a messaging device, a gaming console, a tablet, a medical device, exercise equipment, a personal digital assistant, and other devices with a capability of capturing an image.

Referring to Fig. 5, the apparatus 500 can include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 can include one or more processors 520 to execute instructions to perform all or part of the steps in the above described methods. Moreover, the processing component 502 can include one or more modules which facilitate the interaction between the processing component 502 and other components. For instance, the processing component 502 can include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 can include a power management system, one or more power sources, and any other components associated with the generation, management, and distribution of power in the apparatus 500.

The multimedia component 508 includes a screen providing an output interface between the apparatus 500 and the user. In some examples, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. The multimedia component 508 includes a front camera and/or a rear camera. The front camera and the rear camera can receive an external multimedia datum while the apparatus 500 is in an operation mode, such as a photographing mode or a video mode. Each of the front camera and the rear camera can be a fixed optical lens system or have focus and optical zoom capability.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal can be further stored in the memory 504 or transmitted via the communication component 516. In some examples, the audio component 510 further includes a speaker to output audio signals.

The I/O interface 512 provides an interface between the processing component 502 and peripheral interface modules, such as a keyboard, a click wheel, buttons, and the like. The buttons can include, but are not limited to, a home button, a volume button, a starting button, and a locking button.

The sensor component 514 includes one or more sensors to provide status assessments of various aspects of the apparatus 500. For instance, the sensor component 514 can detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 can include a proximity sensor configured to detect the presence of nearby objects without any physical contact. The sensor component 514 can also include a light sensor, such as a CMOS or CCD image sensor, for use in imaging applications. In some examples, the sensor component 514 can also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one example, the communication component 516 receives a broadcast signal or broadcast associated information from an external broadcast management system via a broadcast channel. In one example, the communication component 516 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In some examples, the apparatus 500 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some examples, there is also provided a non-transitory computer-readable storage medium including instructions, such as included in the memory 504, executable by the processor 520 in the apparatus 500, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium are executed by the processor of the apparatus 500, the apparatus 500 is enabled to perform the steps as shown in Fig. 1, 2A, 2B or 2E.

## Claims

1. A computer implemented method for capturing an image, the method comprising:
acquiring (101, 201) an image captured by a camera;
acquiring (102, 201) an obstacle in the image, by acquiring (201a) an object having a shape similar to a preset obstacle shape in the image, or acquiring an object when a difference in color between pixels of the object and pixels of background of the image is larger than a preset threshold;
erasing (103) information within an obstacle region which corresponds to the obstacle; and
repairing (104, 204) the obstacle region in which information has been erased and
**characterized in that**
acquiring (102, 201) an obstacle in the image further comprises:
displaying the acquired object with a mark, and when the object displayed with a mark is selected, taking the object as the obstacle in the image, and
erasing (103) information within an obstacle region which corresponds to the obstacle comprises:
recognizing (202) an outline of the obstacle in a region of the image which contains the obstacle, a difference in gray-scale between a pixel constituting the outline of the obstacle and a pixel adjacent to the pixel being larger than a preset threshold; and
determining (203) a region surrounding the outline of the obstacle as an obstacle region, and
erasing information within the obstacle region, wherein, the obstacle region has a size that is slightly larger than the size of the shape of the obstacle.

2. The method of claim 1, wherein displaying the acquired object with a mark, and when the object displayed with a mark is selected, taking the object as the obstacle in the image, comprises:
displaying a delete control at the acquired object in the image, and when the delete control is triggered, taking the object corresponding to the deleted control as the obstacle in the image; or
displaying the acquired object with a mark in the image, and taking the object as the obstacle in the image when the object is triggered by an extended press.

3. The method of any of claims 1-2, wherein repairing (104, 204) the obstacle region in which information has been erased comprises:
acquiring (204a) a geographical location for capturing the image, and retrieving images of the same type, each of the retrieved images having a capturing location the same as the geographical location;
selecting (204b) a reference image for repairing from the retrieved images of the same type, a similarity between the image and the reference image for repairing being larger than a similarity threshold; and
repairing (204c) the obstacle region in the image according to the reference image for repairing.

4. The method of claim 3, wherein repairing (204c) the obstacle region in the image according to the reference image for repairing comprises:
acquiring information for repairing from a region in the reference image for repairing which corresponds to the obstacle, and repairing the obstacle region in the image with the information for repairing.

5. The method of any of claims 1-2, wherein repairing (104, 204) the obstacle region in which information has been erased comprises:
stretching and deforming a background around the obstacle region to fill the obstacle region.

6. An apparatus for capturing an image, the apparatus comprising:
a first acquiring module (310, 410) configured to acquire an image captured by a camera; a second acquiring module (320, 420) configured to acquire an obstacle in the image which is acquired by the first acquiring module (310, 410); wherein the second acquiring module (320, 420) comprises an acquiring sub-module (420a) configured to acquire an object having a shape similar to a preset obstacle shape in the image which is acquired by the first acquiring module (310, 410), or acquire an object when a difference in color between pixels of the object and pixels of background of the image acquired by the first acquiring module (310, 410) is larger than a preset threshold;
an erasing module (330, 430) configured to erase information within an obstacle region which corresponds to the obstacle acquired by the second acquiring module (320, 420); and
a repairing module (340, 440) configured to repair the obstacle region in which information has been erased and
**characterized in that**
the second acquiring module (320, 420) further comprises:
displaying the object acquired by the acquiring sub-module (420a) with a mark, and when the object displayed with a mark is selected, taking the object as the obstacle in the image, and
the erasing module (330, 430) comprises:
a recognizing sub-module (430a) configured to recognize an outline of the obstacle in a region of the image which contains the obstacle, a difference in gray-scale between a pixel constituting the outline of the obstacle and a pixel adjacent to the pixel being larger than a preset threshold; and
an erasing sub-module (430b) configured to determine a region surrounding the outline of the obstacle as an obstacle region, and erase information within the obstacle region, wherein, the obstacle region has a size that is slightly larger than the size of the shape of the obstacle.

7. The apparatus of claim 6, wherein displaying the object acquired by the acquiring sub-module (420a) with a mark, and when the object displayed with a mark is selected, taking the object as the obstacle in the image, is further configured to:
display a delete control at the acquired object in the image, and when the delete control is triggered, take the object corresponding to the deleted control as the obstacle in the image; or
display the acquired object with a mark in the image, and take the object as the obstacle in the image when the object is triggered by an extended press.

8. The apparatus of any of claims 6 or 7, wherein the repairing module (440) comprises:
a retrieving sub-module (440a) configured to acquire a geographical location for capturing the image, and retrieve images of the same type, each of the retrieved images having a capturing location the same as the geographical location;
a selecting sub-module (440b) configured to select a reference image for repairing from the images of the same type retrieved by the retrieving sub-module (440a), a similarity between the image and the reference image for repairing being larger than a similarity threshold; and
a repairing sub-module (440c) configured to repair the obstacle region in the image according to the reference image for repairing selected by the selecting sub-module (440b).

9. The apparatus of claim 8, wherein the repairing sub-module (440c) is further configured to:
acquire information for repairing from a region corresponding to the obstacle in the reference image for repairing selected by the selecting sub-module (440b), and repair the obstacle region in the image with the information for repairing.

10. The apparatus of any of claims 6 or 7, wherein the repairing module (440) further comprises:
a filling sub-module (440d) configured to stretch and deform a background around the obstacle region to fill the obstacle region.

## Patentansprüche

1. Computerimplementiertes Verfahren zur Erfassung eines Bildes, wobei das Verfahren die folgenden Schritte aufweist:
Erfassen (101, 201) eines von einer Kamera aufgenommenen Bildes;
Erfassen (102, 201) eines Hindernisses in dem Bild durch Erfassen (201a) eines Hindernisses mit einer Form, welche einer voreingestellten Hindernisform in dem Bild ähnlich ist, oder Erfassen eines Hindernisses, wenn eine Farbdifferenz zwischen Pixeln des Objekts und Pixeln des Hintergrunds des Bildes größer als ein voreingestellter Schwellenwert ist;
Löschen (103) von Informationen innerhalb eines Hindernisbereichs, der dem Hindernis entspricht; und
Reparieren (104, 204) des Hindernisbereichs, in dem Informationen gelöscht wurden, und
**dadurch gekennzeichnet, dass** das Erfassen (102, 201) eines Hindernisses in dem Bild ferner aufweist:
das Anzeigen des erfassten Objekts mit einer Markierung, und wenn das mit einer Markierung angezeigte Objekt ausgewählt wird, Bestimmen des Objekts als das Hindernis in dem Bild, und
das Löschen (103) von Informationen innerhalb eines Hindernisbereichs, der dem Hindernis entspricht, aufweist:
das Erkennen (202) einer Kontur des Hindernisses in einem Bereich des Bildes, der das Hindernis enthält, wobei ein Unterschied in der Graustufe zwischen einem Pixel, das die Kontur des Hindernisses bildet, und einem Pixel neben diesem Pixel größer als ein voreingestellter Schwellenwert ist; und
das Bestimmen (203) eines Bereichs, der die Kontur des Hindernisses umgibt, als einen Hindernisbereich, und das Löschen von Informationen innerhalb des Hindernisbereichs, wobei der Hindernisbereich eine Größe aufweist, die geringfügig größer als die Größe der Form des Hindernisses ist.

2. Verfahren nach Anspruch 1, bei welchem das erfasste Objekt mit einer Markierung angezeigt wird, und wenn das mit einer Markierung angezeigte Objekt ausgewählt wird, das Bestimmen des Objekts als Hindernis in dem Bild die folgenden Schritte aufweist:
Anzeigen eines Löschsteuerelements an dem erfassten Objekt in dem Bild und wenn das Löschsteuerelement getriggert wird, Bestimmen des Objekts, das dem Löschsteuerelement entspricht, als das Hindernis in dem Bild; oder
Anzeigen des erfassten Objekts mit einer Markierung in dem Bild und Bestimmen des Objekts als das Hindernis in dem Bild, wenn das Objekt durch anhaltendes Drücken getriggert wird.

3. Verfahren nach einem der Ansprüche 1-2, bei welchem das Reparieren (104, 204) des Hindernisbereichs, in welchem Informationen gelöscht wurden, die folgenden Schritte aufweist:
Erfassen (204a) einer geografischen Position für das Aufnehmen des Bildes und Abrufen von Bildern desselben Typs, wobei jedes der abgerufenen Bilder eine Aufnahmeposition gleich der geografischen Position aufweist;
Auswählen (204b) eines Referenzbildes für die Reparatur unter den abgerufenen Bildern desselben Typs, wobei eine Ähnlichkeit zwischen dem Bild und dem Referenzbild für die Reparatur größer als ein Ähnlichkeitsschwellenwert ist; und
Reparieren (204c) des Hindernisbereichs in dem Bild gemäß dem Referenzbild für die Reparatur.

4. Verfahren nach Anspruch 3, bei welchem das Reparieren (204c) des Hindernisbereichs in dem Bild gemäß dem Referenzbild für die Reparatur aufweist:
das Erfassen von Informationen für die Reparatur aus einem Bereich in dem Referenzbild für die Reparatur, welcher dem Hindernis entspricht, und Reparieren des Hindernisbereichs in dem Bild mit den Informationen für die Reparatur.

5. Verfahren nach einem der Ansprüche 1-2, bei welchem das Reparieren (104, 204) des Hindernisbereichs, in dem Informationen gelöscht wurden, aufweist:
das Strecken und Verformen eines Hintergrunds um den Hindernisbereich, um den Hindernisbereich zu füllen.

6. Vorrichtung zum Aufnehmen eines Bildes, bei welcher die Vorrichtung aufweist:
ein erstes Erfassungsmodul (310, 410), das dazu ausgebildet ist, ein von einer Kamera aufgenommenes Bild zu erfassen;
ein zweites Erfassungsmodul (320, 420), das dazu ausgebildet ist, ein Hindernis in dem Bild zu erfassen, das von dem ersten Erfassungsmodul (310, 410) erfasst wird;
wobei das zweite Erfassungsmodul (320, 420) ein Erfassungs-Submodul (420a) aufweist, das dazu ausgebildet ist, ein Objekt zu erfassen, das eine Form aufweist, die einer voreingestellten Hindernisform in dem Bild ähnlich ist, das von dem ersten Erfassungsmodul (310, 410) erfasst wird, oder ein Objekt zu erfassen, wenn eine Farbdifferenz zwischen Pixeln des Objekts und Pixeln des Hintergrunds des von dem ersten Erfassungsmodul (310, 410) erfassten Bildes größer als ein voreingestellter Schwellenwert ist;
ein Löschmodul (330, 430), das dazu ausgebildet ist, Informationen innerhalb eines Hindernisbereichs zu löschen, welcher dem vom zweiten Erfassungsmodul (320, 420) erfassten Hindernis entspricht, und
ein Reparaturmodul (340, 440), das dazu ausgebildet ist, den Hindernisbereich zu reparieren, in dem Informationen gelöscht wurden, und
**dadurch gekennzeichnet, dass**
das zweite Erfassungs-Submodul (320, 420) ferner aufweist:
das Anzeigen des von dem Erfassungs-Submodul (420a) erfassten Objekts mit einer Markierung, und wenn das mit einer Markierung angezeigte Objekt gewählt wird, Bestimmen des Objekts als das Hindernis in dem Bild, und
das Löschmodul (330, 430) aufweist:
ein Erkennungs-Submodul (430a), das dazu ausgebildet ist, eine Kontur des Hindernisses in einem Bereich des Bildes zu erkennen, der das Hindernis erkennt, wobei ein Unterschied in der Graustufe zwischen einem Pixel, das die Kontur des Hindernisses bildet, und einem Pixel neben diesem Pixel größer als ein voreingestellter Schwellenwert ist; und
ein Lösch-Submodul (430b) dazu ausgebildet ist, einen Bereich, der die Kontur des Hindernisses umgibt, als einen Hindernisbereich zu bestimmen, und Informationen innerhalb des Hindernisbereichs zu löschen, wobei der Hindernisbereich eine Größe aufweist, die geringfügig größer als die Größe der Form des Hindernisses ist.

7. Vorrichtung nach Anspruch 6, bei welcher das von dem Erfassungs-Submodul (420a) erfasste Objekt mit einer Markierung angezeigt wird, und wenn das mit einer Markierung angezeigte Objekt ausgewählt wird, das Objekt als Hindernis in dem Bild bestimmt wird, ferner dazu ausgebildet ist:
ein Löschsteuerelement an dem erfassten Objekt in dem Bild anzuzeigen, und wenn das Löschsteuerelement getriggert wird, das Objekt, das dem Löschsteuerelement entspricht, als das Hindernis in dem Bild zu bestimmen; oder
das erfasste Objekt mit einer Markierung in dem Bild anzuzeigen und das Objekt als das Hindernis in dem Bild zu bestimmen, wenn das Objekt durch anhaltendes Drücken getriggert wird.

8. Vorrichtung nach einem der Ansprüche 6 oder 7, bei welcher das Reparaturmodul (440) aufweist:
ein Abruf-Submodul (440a), das dazu ausgebildet ist, eine geografische Position für das Aufnehmen des Bildes zu erfassen und Bilder desselben Typs abzurufen, wobei jedes der abgerufenen Bilder eine Aufnahmeposition gleich der geografischen Position aufweist;
ein Auswähl-Submodul (440b), das dazu ausgebildet ist, ein Referenzbild für die Reparatur unter den von dem Abruf-Submodul (440a) abgerufenen Bildern desselben Typs zu wählen, wobei eine Ähnlichkeit zwischen dem Bild und dem Referenzbild für die Reparatur größer als ein Ähnlichkeitsschwellenwert ist; und
ein Reparatur-Submodul (440c), das dazu ausgebildet ist, den Hindernisbereich in dem Bild gemäß dem von dem Auswähl-Submodul (440b) ausgewählten Referenzbild für die Reparatur zu reparieren.

9. Vorrichtung nach Anspruch 8, bei welcher das Reparatur-Submodul (440c) ferner dazu ausgebildet ist:
Informationen für die Reparatur aus einem Bereich in dem von dem Auswähl-Submodul (440b) ausgewählten Referenzbild für die Reparatur zu erfassen, welcher dem Hindernis entspricht, und den Hindernisbereich in dem Bild mit den Informationen für die Reparatur zu reparieren.

10. Vorrichtung nach einem der Ansprüche 6 oder 7, bei welcher das Reparaturmodul (440) ferner aufweist:
ein Füll-Submodul (440d), das dazu ausgebildet ist, einen Hintergrund, um den Hindernisbereich zu strecken und zu verformen, um den Hindernisbereich zu füllen.

## Revendications

1. Procédé mis en œuvre par ordinateur pour capturer une image, le procédé comprenant le fait de:
acquérir (101, 201) une image capturée par une caméra;
acquérir (102, 201) un obstacle dans l'image en acquérant (201a) un objet présentant une forme similaire à une forme d'obstacle préétablie dans l'image, ou en acquérant un objet lorsqu'une différence de couleur entre les pixels de l'objet et les pixels de l'arrière-plan de l'image est supérieure à un seuil prédéfini;
effacer (103) les informations dans une région d'obstacle qui correspond à l'obstacle; et
réparer (104, 204) la région d'obstacle dans laquelle les informations ont été effacées, et
**caractérisé par le fait que**
l'acquisition (102, 201) d'un obstacle dans l'image comprend par ailleurs le fait de:
afficher l'objet acquis avec un repère, et lorsque l'objet affiché avec un repère est sélectionné, prendre l'objet comme l'obstacle dans l'image, et
l'effacement (103) des informations dans une région d'obstacle qui correspond à l'obstacle comprend le fait de:
reconnaître (202) un contour de l'obstacle dans une région de l'image qui contient l'obstacle, une différence d'échelle de gris entre un pixel constituant le contour de l'obstacle et un pixel adjacent au pixel étant supérieure à un seuil préétabli; et
déterminer (203) une région entourant le contour de l'obstacle comme région d'obstacle, et effacer les informations dans la région d'obstacle, où la région d'obstacle présente une grandeur qui est légèrement plus grande que la grandeur de la forme de l'obstacle.

2. Procédé selon la revendication 1, dans lequel l'affichage de l'objet acquis avec un repère et, lorsque l'objet affiché avec un repère est sélectionné, la prise de l'objet comme obstacle dans l'image, comprennent le fait de:
afficher une commande de suppression au niveau de l'objet acquis dans l'image et, lorsque la commande de suppression est déclenchée, prendre l'objet correspondant à la commande de suppression comme obstacle dans l'image; ou
afficher l'objet acquis avec un repère dans l'image et prendre l'objet comme obstacle dans l'image lorsque l'objet est déclenché par une pression prolongée.

3. Procédé selon l'une quelconque des revendications 1 à 2, dans lequel la réparation (104, 204) de la région d'obstacle dans laquelle ont été effacées les informations comprend le fait de:
acquérir (204a) un emplacement géographique pour capturer l'image, et récupérer les images du même type, chacune des images récupérées présentant un emplacement de capture identique à l'emplacement géographique;
sélectionner (204b) une image de référence pour la réparation parmi les images récupérées du même type, une similitude entre l'image et l'image de référence pour la réparation étant supérieure à un seuil de similitude; et
réparer (204c) la région d'obstacle dans l'image selon l'image de référence pour la réparation.

4. Procédé selon la revendication 3, dans lequel la réparation (204c) de la région d'obstacle dans l'image selon l'image de référence pour la réparation comprend le fait de:
acquérir les informations pour la réparation à partir d'une région dans l'image de référence pour la réparation qui correspond à l'obstacle, et réparer la région d'obstacle dans l'image par les informations pour la réparation.

5. Procédé selon l'une quelconque des revendications 1 à 2, dans lequel la réparation (104, 204) de la région d'obstacle dans laquelle ont été effacées les informations comprend le fait de:
étirer et déformer un arrière-plan autour de la région d'obstacle pour remplir la région d'obstacle.

6. Appareil pour capturer une image, l'appareil comprenant:
un premier module d'acquisition (310, 410) configuré pour acquérir une image capturée par une caméra;
un deuxième module d'acquisition (320, 420) configuré pour acquérir un obstacle dans l'image qui est acquise par le premier module d'acquisition (310, 410); où le deuxième module d'acquisition (320, 420) comprend un sous-module d'acquisition (420a) configuré pour acquérir un objet présentant une forme similaire à une forme d'obstacle préétablie dans l'image qui est acquise par le premier module d'acquisition (310, 410), ou acquérir un objet lorsqu'une différence de couleur entre les pixels de l'objet et les pixels de l'arrière-plan de l'image acquise par le premier module d'acquisition (310, 410) est supérieure à un seuil préétabli;
un module d'effacement (330, 430) configuré pour effacer les informations dans une région d'obstacle qui correspond à l'obstacle acquis par le deuxième module d'acquisition (320, 420); et un module de réparation (340, 440) configuré pour réparer la région d'obstacle dans laquelle ont été effacées les informations, et
**caractérisé par le fait que**
le deuxième module d'acquisition (320, 420) comprend par ailleurs le fait de:
afficher l'objet acquis par le sous-module d'acquisition (420a) avec un repère et, lorsque l'objet affiché avec un repère est sélectionné, prendre l'objet comme obstacle dans l'image, et
le module d'effacement (330, 430) comprend:
un sous-module de reconnaissance (430a) configuré pour reconnaître un contour de l'obstacle dans une région de l'image qui contient l'obstacle, une différence d'échelle de gris entre un pixel constituant le contour de l'obstacle et un pixel adjacent au pixel étant supérieur à un seuil préétabli; et
un sous-module d'effacement (430b) configuré pour déterminer une région entourant le contour de l'obstacle comme région d'obstacle, et pour effacer les informations dans la région d'obstacle, où la région d'obstacle présente une grandeur qui est légèrement plus grande que la grandeur de la forme de l'obstacle.

7. Appareil selon la revendication 6, dans lequel l'affichage de l'objet acquis par le sous-module d'acquisition (420a) avec un repère et, lorsque l'objet affiché avec un repère est sélectionné, la prise de l'objet comme obstacle dans l'image, sont par ailleurs configurés pour:
afficher une commande de suppression au niveau de l'objet acquis dans l'image et, lorsque la commande de suppression est déclenchée, prendre l'objet correspondant à la commande de suppression comme obstacle dans l'image; ou
afficher l'objet acquis avec un repère dans l'image et prendre l'objet comme obstacle dans l'image lorsque l'objet est déclenché par une pression prolongée.

8. Appareil selon l'une quelconque des revendications 6 ou 7, dans lequel le module de réparation (440) comprend: un sous-module de récupération (440a) configuré pour acquérir un emplacement géographique pour capturer l'image, et récupérer les images du même type, chacune des images récupérées présentant un emplacement de capture identique à l'emplacement géographique;
un sous-module de sélection (440b) configuré pour sélectionner une image de référence pour la réparation parmi les images du même type récupérées par le sous-module de récupération (440a), une similitude entre l'image et l'image de référence pour la réparation étant supérieure à un seuil de similitude; et un sous-module de réparation (440c) configuré pour réparer la région d'obstacle dans l'image selon l'image de référence pour la réparation sélectionnée par le sous-module de sélection (440b).

9. Appareil selon la revendication 8, dans lequel le sous-module de réparation (440c) est par ailleurs configuré pour:
acquérir les informations pour la réparation à partir d'une région correspondant à l'obstacle dans l'image de référence pour la réparation sélectionnée par le sous-module de sélection (440b), et réparer la région d'obstacle dans l'image par les informations pour la réparation.

10. Appareil selon l'une quelconque des revendications 6 ou 7, dans lequel le module de réparation (440) comprend par ailleurs:
un sous-module de remplissage (440d) configuré pour étirer et déformer un arrière-plan autour de la région d'obstacle pour remplir la région d'obstacle.
